# EUROPEAN PATENT APPLICATION

(11) **EP 4 711 376 A1**
(43) Date of publication of application: **18.03.2026**
(21) Application number: 23949049.3
(22) Date of filing: 20.11.2023
(51) Int. Cl.: C07F 17/00, C08F 210/02, C08F 232/08, C08F 4/642, C08F 4/643, C08F 4/6592

(54) **METALLOCENE COMPOUND, CATALYST COMPOSITION ,AND METHOD FOR PREPARING ETHYLENE-CYCLIC OLEFIN COPOLYMER**

(30) Priority: 16.08.2023 CN 202311035351; 16.08.2023 CN 202311034962
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: WU, Changjiang, Beijing 100013 (CN); WANG, Wei, Beijing 100013 (CN); QU, Shuzhang, Beijing 100013 (CN); LI, Xinwei, Beijing 100013 (CN); CHEN, Jian, Beijing 100013 (CN); ZHENG, Cui, Beijing 100013 (CN); AN, Jingyan, Beijing 100013 (CN); GUO, Min, Beijing 100013 (CN)
(74) Representative: Hoffmann Eitle
(86) International application number: PCT/CN2023/132592
(87) International publication number: WO 2025/035632

(57) **Abstract**

The present invention relates to the field of olefin polymerization, and discloses a metallocene compound, a catalyst composition, and a method for preparing an ethylene-cyclic olefin copolymer. The metallocene compound has a structureas shown in formula (1), and in formula (1) M is a tetravalent transition metal atom; and X¹ and X² are each independently a halogen atom, an alkyl having 1 to 10 carbon atoms, an aromatic group having 6 to 12 carbon atoms or an N,N-dialkylamine group having 2 to 8 carbon atoms. Using the catalyst composition of the present invention in the preparation of an ethylene-cyclic olefin copolymer has the advantages of high catalytic activity, good copolymerization performance, and high molecular weight of an obtained polymer.

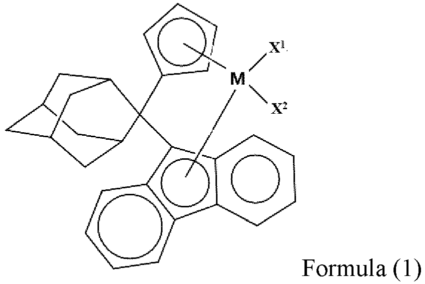

## Description

### Cross Reference to Related Applications

This application claims the benefit of Chinese patent applications 202311035351.1 and 202311034962.4, filed on August 16, 2023, the contents of which are incorporated herein by reference.

### Field of the Invention

The present invention relates to the field of olefin polymerization, in particular to a metallocene compound, a catalyst composition using the metallocene compound, and a method for preparing an ethylene-cyclic olefin copolymer by using the catalyst composition.

### Background of the Invention

Metallocene compounds used in olefin polymerization have been a research hotspot in organometallic chemistry, catalytic chemistry, polymer chemistry and materials science in recent decades. With this type of catalyst, olefin polymers with uniform molecular weight distribution and chemical composition distribution can be obtained, while the molecular structure and molecular weight of the polymers can be highly controlled by adjusting the catalyst structure. The copolymerization ability of metallocene is strong, which is reflected in two respects (Chemistry Select 2020, 5, 7581-7585): on one hand, under the same polymerization conditions, a copolymer obtained by using metallocene has a higher comonomer content compared with other catalysts, which is high efficiency of copolymerization using the metallocene; on the other hand, some monomers that cannot be polymerized catalytically by other catalysts can also serve as comonomers of a metallocene compound system, which is the broad spectrum of copolymerization using the metallocene. Due to the high efficiency and broad spectrum of copolymerization using the metallocene compounds, the metallocene compounds can catalyze the formation of many new copolymers, which have new compositions and structures compared with those obtained by using other catalysts, thus possibly having new properties, thus realizing the application of polyolefin materials in new fields.

Cyclic olefin copolymers (COC) not only have good processability, but also have excellent thermal, optical and mechanical properties, such as excellent thermal and chemical resistance, excellent transparency, a high refractive index, high hardness or softness, and low permeability to gas and water. These exceptional properties make the COC new engineering plastic with potential commercial application prospects in the fields of video and compact discs, optical lenses, light guiding fibers, foam foils, medical devices and capacitors. Due to their good optical and mechanical properties, the COC are used in the manufacture of optical discs, magneto-optical storage discs, gratings and other optical devices.

Although the COC have excellent properties and wide applications, their high production costs have constrained their further market development, so the development of more economical, efficient catalyst systems is the key to allow this material to play a greater role in more occasions.

The structure of a metallocene catalyst determines its catalytic performance, and small changes in structure may lead to great changes in catalytic performance. When designing the metallocene catalyst, the polymerization activity and copolymerization performance of the catalyst, as well as the molecular weight of polymers, will be improved as much as possible by the structural design, thereby widening the operating space of the production and improving the economy of the production.

The existing metallocene catalysts still have insufficiencies that the catalyst activity, copolymerization performance and polymer molecular weight need to be improved.

### Summary of the Invention

An object of the present invention is to provide a novel metallocene compound, a catalyst composition using the metallocene compound and a method for preparing an ethylene-cyclic olefin copolymer by using the catalyst composition. The catalyst composition of the present invention has the advantages of high catalytic activity, good copolymerization performance, and high molecular weight of the obtained polymer in the preparation of the ethylene-cyclic olefin copolymer.

In order to achieve the above objects, the first aspect of the present invention provides a metallocene compound, wherein the metallocene compound has a structure represented by formula (1), 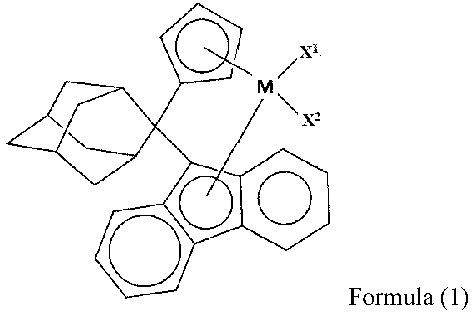 wherein in formula (1), M is a tetravalent transition metal atom; and X¹ and X² are each independently a halogen atom, an alkyl having 1 to 10 carbon atoms, an aryl having 6 to 12 carbon atoms or an N,N-dialkyl amino having 2 to 8 carbon atoms.

Preferably, M is a titanium atom, a zirconium atom or a hafnium atom, preferably a titanium atom or a zirconium atom, more preferably a zirconium atom.

Preferably, X¹ and X² are each independently a halogen atom, an alkyl having 1 to 6 carbon atoms, an aryl having 6 to 10 carbon atoms or an N,N-dialkyl amino having 2 to 6 carbon atoms; more preferably, X¹ and X² are each independently a halogen atom, an alkyl having 1 to 3 carbon atoms, an aryl having 6 to 8 carbon atoms or an N,N-dialkyl amino having 2 to 6 carbon atoms; further preferably, X¹ and X² are each independently F, Cl, Br, I, methyl, ethyl, propyl, phenyl, benzyl, N,N-dimethyl amino, N,N-diethyl amino or N,N-dipropyl amino; and more further preferably, X¹ and X² are each independently Cl, methyl, benzyl or N,N-dimethyl amino.

The second aspect of the present invention provideds a catalyst composition, wherein the catalyst composition includes:
a) the metallocene compound according to the first aspect of the present invention; and
b) a cocatalyst component.

Preferably, the cocatalyst component includes an alkyl aluminoxane or a combination of an organoboron compound and an organoaluminum compound; and more preferably, the cocatalyst component is an alkyl aluminoxane or a combination of an organoboron compound and an organoaluminum compound.

Preferably, the alkyl aluminoxane is a compound selected from structures shown in formula (2) and/or formula (3), 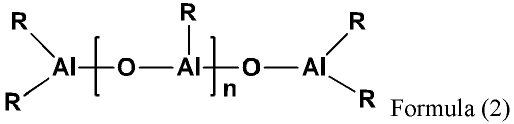 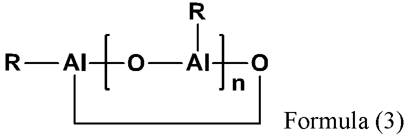 in formula (2) and formula (3), R is selected from an alkyl having 1 to 15 carbon atoms, and n represents an integer of 4 to 30; and more preferably, R is selected from an alkyl having 1 to 5 carbon atoms, and n represents an integer of 10 to 30.

Preferably, the alkyl aluminoxane is methyl aluminoxane.

Preferably, the organoboron compound is [B(C₆F₅)₄]⁻Z⁺, Z⁺ having a structure shown in formula (4) or formula (5),

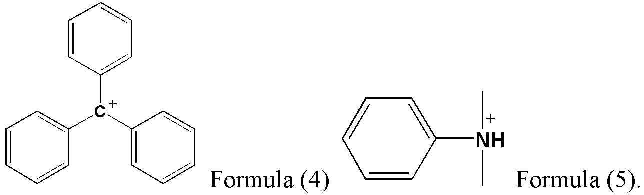

Preferably, the organoaluminum compound is a compound having a structure represented by a general formula AlX₁X₂X₃, X₁, X₂ and X₃ are each a halogen atom or an alkyl having 1 to 12 carbon atoms, X₁, X₂ and X₃ may be the same or different, and at least one of X₁, X₂ and X₃ is an alkyl having 1 to 12 carbon atoms.

Preferably, the organoaluminum compound is one or a mixture of two or more of diethyl aluminum chloride, triethyl aluminum, tri-isobutyl aluminum, tri-n-hexyl aluminum and tri-n-octyl aluminum, preferably tri-isobutyl aluminum.

Preferably, the cocatalyst component is an alkyl alumoxane, and a molar ratio of the metallocene compound to the alkyl alumoxane in terms of aluminum is 1: (100-50,000), preferably 1: (500-10,000), more preferably 1: (500-2,000).

Preferably, the cocatalyst component is a combination of an organoboron compound and an organoaluminum compound, a molar ratio of the metallocene compound to the organoboron compound is 1: (1-20), preferably 1: (1-5), more preferably 1: (1-2), and a molar ratio of the metallocene compound to the organoaluminum compound is 1: (10-5,000), preferably 1: (50-1,000), more preferably 1: (50-500).

The third aspect of the present invention provides a method for preparing an ethylene-cyclic olefin copolymer, including subjecting ethylene and cyclic olefin to a copolymerization reaction by using a catalyst composition, wherein the catalyst composition is the catalyst composition according to the second aspect of the present invention.

Preferably, the metallocene compound in a copolymerization reaction system has a concentration of 1×10⁻⁸ mol/L to 1×10⁻² mol/L, preferably 1×10⁻⁶ mol/L to 1×10⁻³ mol/L.

Preferably, the cyclic olefin is one or more of cyclopentene, cyclohexene, cycloheptene, cyclooctene, norbornene, and tetracyclo[6.2.1.13,6.2,7]dodeca-4-ene.

Preferably, the ethylene has a partial pressure of 0.1 to 6 MPa, preferably 0.1 to 3 MPa.

Preferably, the copolymerization reaction is carried out in the presence of an organic solvent, the organic solvent being one or more of toluene, cyclohexane, and hexane.

Preferably, the copolymerization reaction is carried out at a temperature of -50°C to 200°C for 1 to 300 min.

By the above technical solutions, the present invention provides a novel metallocene compound, a catalyst composition using the metallocene compound, and a method for preparing an ethylene-cyclic olefin copolymer by using the catalyst composition. The catalyst composition of the present invention has the advantages of high catalytic activity, good copolymerization performance, and high molecular weight of the obtained polymer in the preparation of the ethylene-cyclic olefin copolymer.

### Detailed Description of the Embodiments

The endpoints and any values of the ranges disclosed herein are not limited to the precise range or value, and these ranges or values should be understood as including values close to these ranges or values. For numerical ranges, the endpoint values of each range, the endpoint values of each range and individual point values, and individual point values may be combined with each other to obtain one or more new numerical ranges, and these numerical ranges should be considered to be specifically disclosed herein.

The first aspect of the invention provides a metallocene compound, wherein the metallocene compound has a structure represented by formula (1), 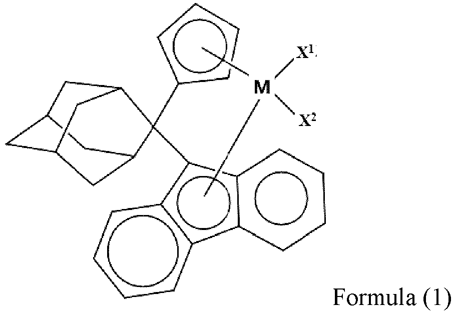 wherein in formula (1), M is a tetravalent transition metal atom; and X¹ and X² are each independently a halogen atom, an alkyl having 1 to 10 carbon atoms, an aryl having 6 to 12 carbon atoms, or an N,N-dialkylamino having 2 to 8 carbon atoms.

According to the metallocene compound of the present invention, in formula (1), M is a tetravalent transition metal atom, and preferably, M is a titanium atom, a zirconium atom or a hafnium atom; more preferably, M is a titanium atom or a zirconium atom; and particularly preferably, M is a zirconium atom.

According to the metallocene compound of the present invention, in formula (1), X¹ and X² are each independently a halogen atom, an alkyl having 1 to 10 carbon atoms, an aryl having 6 to 12 carbon atoms or an N,N-dialkyl amino having 2 to 8 carbon atoms.

Examples of the halogen atom may include fluorine, chlorine, bromine or iodine, preferably fluorine, chlorine or bromine, more preferably chlorine or bromine, and particularly preferably chlorine. Examples of the alkyl having 1 to 10 carbon atoms may include methyl, ethyl, propyl, isopropyl, butyl, pentyl, hexyl, heptyl, octyl, nonyl, decyl, and the like. Among them, methyl, ethyl, propyl or isopropyl is preferred, more preferably methyl or ethyl.

Examples of the aryl having 6 to 12 carbon atoms may include phenyl, benzyl, or phenethyl, and the like. Among them, benzyl is preferred.

In the present invention, preferably, in the formula (1), X¹ and X² are each independently a halogen atom, an alkyl having 1 to 6 carbon atoms, an aryl having 6 to 10 carbon atoms, or an N,N-dialkyl amino having 2 to 6 carbon atoms; more preferably, X¹ and X² are each independently a halogen atom, an alkyl having 1 to 3 carbon atoms, an aryl having 6 to 8 carbon atoms, or an N,N-dialkyl amino having 2 to 6 carbon atoms; further preferably, X¹ and X² are each independently F, Cl, Br, I, methyl, ethyl, propyl, phenyl, benzyl, N,N-dimethyl amino, N,N-diethyl amino or N,N-dipropyl amino; and particularly preferably, X¹ and X² are each independently Cl, methyl, benzyl or N,N-dimethylamino. In a particularly preferred embodiment of the present invention, X¹ and X² are both Cl.

In another particularly preferred embodiment of the present invention, X¹ and X² are both methyl.

In another particularly preferred embodiment of the present invention, X¹ and X² are both benzyl.

In another particularly preferred embodiment of the present invention, X¹ and X² are both N,N-dimethyl amino.

Specific examples of the metallocene compound may preferably include the following compounds:
in formula (1), M is a titanium atom, and X¹ and X² are both Cl;
in formula (1), M is a titanium atom, and X¹ and X² are both methyl;
in formula (1), M is a titanium atom, and X¹ and X² are both benzyl;
in formula (1), M is a titanium atom, and X¹ and X² are both N,N-dimethyl amino;
in formula (1), M is a zirconium atom, and X¹ and X² are both Cl;
in formula (1), M is a zirconium atom, and X¹ and X² are both methyl;
in formula (1), M is a zirconium atom, and X¹ and X² are both benzyl;
in formula (1), M is a zirconium atom, and X¹ and X² are both N,N-dimethyl amino;
in formula (1), M is a hafnium atom, and X¹ and X² are both Cl;
in formula (1), M is a hafnium atom, and X¹ and X² are both methyl;
in formula (1), M is a hafnium atom, and X¹ and X² are both benzyl; and
in formula (1), M is a hafnium atom, and X¹ and X² are both N,N-dimethyl amino.

The metallocene compound according to the present invention can be synthesized according to the conventional methods in the field.

In the present invention, a preparation method for a metallocene compound in which X¹ and X² each are an N,N-dialkyl amino having 2 to 8 carbon atoms preferably includes the following steps:
Step 1) subjecting a compound A and a compound B to a first contact reaction in the presence of a catalyst C and in the presence of a first solvent to obtain an intermediate product D;
Step 2) subjecting the intermediate product D and a compound E to a second contact reaction in the presence of a second solvent to obtain an intermediate product F; and
Step 3) subjecting the intermediate product F and M(NA₂)₄ to a third contact reaction in the presence of a third solvent to obtain a compound H, 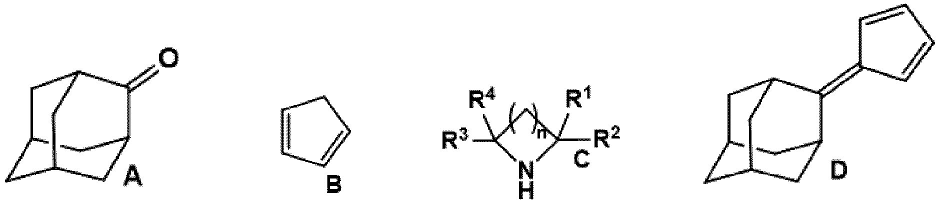 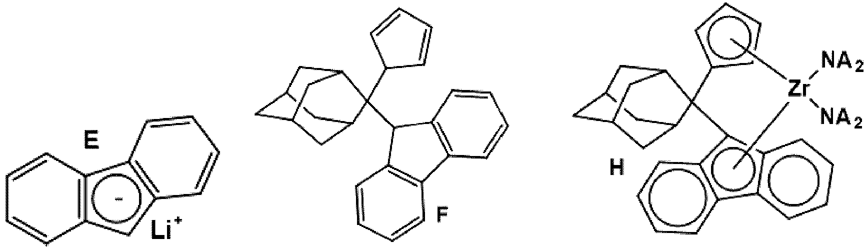
wherein A is hydrocarbyl having 1 to 4 carbon atoms; n is an integer of 1 to 5; and R¹, R², R³, and R⁴ are each independently a hydrogen atom, methyl, ethyl, isopropyl or tert-butyl.

The steps are specifically described below.

### Step 1): subjecting a compound A and a compound B to a first contact reaction in the presence of a catalyst C and in the presence of a first solvent to obtain an intermediate product D .

In the step 1), in the catalyst C, n is preferably 2 or 3.

Examples of the catalyst C preferably include one or more of pyrrolidine, 2-methyl pyrrolidine, 2,5-dimethyl pyrrolidine, 2,2,5,5-tetramethyl pyrrolidine, piperidine and 2,2,6,6-tetramethyl piperidine.

The amount of the catalyst C used can be selected depending on the compound A, and preferably, a molar ratio of the compound A to the catalyst C is 1: (1-5), more preferably 1: (1.1-3).

In the above step 1), the first solvent is preferably methanol, more preferably anhydrous methanol. The amount of the first solvent used may be selected depending on the compound A, for example, the amount of the first solvent used may be 0.5-10 L, preferably 0.8-5 L, more preferably 0.8-2 L, relative to 1 mole of the compound A.

In the above step 1), the amount of the compound B used can be selected depending on the compound A, and preferably, a molar ratio of the compound A to the compound B is 1: (1.2-10), more preferably 1: (1.5-5), further preferably 1: (2-4).

In the above step 1), a contacting mode of the first contact reaction is not particularly limited, as long as the intermediate product D can be obtained, and preferably, the catalyst C is mixed with the first solvent, and the compound A and the compound B are then subjected to the first contact reaction. The conditions of the first contact reaction may include a temperature of 10 to 25°C and a time of 8 to 90 h.

After contacting by the first contact reaction, refining may be carried out by using conventional refining methods in the field, in a preferred embodiment of the present invention, after completion of the first contact reaction, a first contact reaction product is subjected to solid-liquid separation, thereby removing the first solvent and the unreacted catalyst, and then a solid obtained after the solid-liquid separation is washed with the first solvent and dried to obtain the intermediate product D.

The above solid-liquid separation is not particularly limited, and various methods commonly used in the field for separating a solid from a liquid can be used, for example, the above solid-liquid separation can be performed by filtration and/or centrifugation.

The above drying can be performed by using a solvent removal method commonly used in the field, and in a preferred embodiment of the present invention, the solvent is removed under vacuum at 10 to 25°C.

### Step 2): subjecting the intermediate product D and a compound E to a second contact reaction in the presence of a second solvent to obtain an intermediate product F.

In the above step 2), the amount of the compound E used can be selected depending on the amount of the intermediate product D used, and preferably, a molar ratio of the intermediate product D to the compound E is 1: (0.9-1.1) , more preferably 1: (0.95-1.05).

In the above step 2), the second solvent is one or more of aromatic hydrocarbons, ethers and haloalkanes, preferably one or more of diethyl ether, tetrahydrofuran, toluene, dichloromethane and 1,2-dichloroethane.

The amount of the second solvent used may be selected depending on the intermediate product D, for example, the amount of the second solvent used may be 1 to 30 L, preferably 5 to 20 L, more preferably 12 to 18 L, relative to 1 mole of the intermediate product D.

In the above step 2), a contacting mode of the second contact reaction is not particularly limited as long as the intermediate product F can be obtained, and preferably, the compound E is dispersed in a portion of the second solvent under an inert atmosphere (e.g., under a nitrogen atmosphere or an argon atmosphere), and then a solution in which the intermediate product D is dissolved in another portion of the second solvent is added dropwise to a solution in which the compound E is dispersed, and the second contact reaction is carried out.

Preferably, dispersing the compound E in a portion of the second solvent is performed at a temperature of -30°C to 0°C, for example, stirring may be performed at -20°C for about 30 min.

The conditions of the second contact reaction may include a temperature of 10 to 40°C and a time of 8 to 40 h.

After contacting by the second contact reaction, refining may be carried out by using conventional refining methods in the field, in a preferred embodiment of the present invention, after completion of the second contact reaction, a second contact reaction product is poured into a saturated ammonium chloride aqueous solution, an organic phase is separated, an aqueous phase is extracted with, for example, diethyl ether, organic phases are mixed, and dried with a drying agent (e.g., anhydrous sodium sulfate), and the organic solvent is removed (e.g., the organic solvent is removed under vacuum) to obtain the intermediate product F.

### Step 3): subjecting the intermediate product F and M(NA₂)₄ to a third contact reaction in the presence of a third solvent to obtain a compound H.

In the above M(NA₂)₄, preferably, A is methyl, ethyl or propyl, more preferably methyl or ethyl, particularly preferably methyl.

In the above M(NA₂)₄, preferably, M is a tetravalent transition metal atom, more preferably a titanium atom, a zirconium atom or a hafnium atom, further preferably a titanium atom or a zirconium atom, particularly preferably a zirconium atom.

In the above step 3), the amount of M(NA₂)₄ used can be selected depending on the amount of the intermediate product F used, and preferably, a molar ratio of the intermediate product F to M(NA₂)₄ is 1: (0.95-1.05), more preferably 1: (0.98-1.02).

In the above step 3), the third solvent may be, for example, toluene.

The amount of the third solvent used may be selected depending on the intermediate product F, for example, the amount of the third solvent used may be 1 to 30 L, preferably 5 to 20 L, more preferably 12 to 18 L, relative to 1 mole of the intermediate product F.

The third contact reaction can include carrying out a reaction under reflux for 12 to 36 h.

Preferably, the third contact reaction is carried out under an inert atmosphere, and may be carried out, for example, under a nitrogen atmosphere or an argon atmosphere.

After contacting by the third contact reaction, refining can be carried out by using conventional refining methods in the field, and in a preferred embodiment of the present invention, after completion of the third contact reaction, a third contact reaction product is cooled and subjected to solid-liquid separation, and the solvent is then removed under vacuum to obtain the compound H.

The above solid-liquid separation is not particularly limited, and various methods commonly used in the field for separating a solid from a liquid can be used, for example, the above solid-liquid separation can be performed by filtration and/or centrifugation.

In the present invention, a preparation method for a metallocene compound in which X¹ and X² each are a halogen atom preferably includes the following steps:

### 4) After subjecting the intermediate product F and n-butyl lithium to a fourth contact reaction in the presence of a fourth solvent, subjecting a fourth contact reaction product and MX₄ to a fifth contact reaction to obtain a compound I,

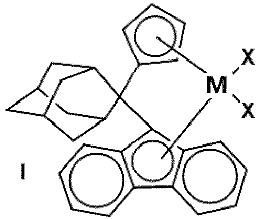

in MX₄ and the compound I, X is a halogen atom and M is a tetravalent transition metal atom. Examples of the halogen atom may include fluorine, chlorine, bromine or iodine, preferably fluorine, chlorine or bromine, more preferably chlorine or bromine, and particularly preferably chlorine. Preferably, M is a titanium atom, a zirconium atom or a hafnium atom, more preferably a titanium atom or a zirconium atom, particularly preferably a zirconium atom.

Specific examples of MX₄ may include zirconium tetrafluoride, zirconium tetrachloride, zirconium tetrabromide, zirconium tetraiodide, titanium tetrafluoride, titanium tetrachloride, titanium tetrabromide, titanium tetraiodide, hafnium tetrafluoride, hafnium tetrachloride, hafnium tetrabromide or hafnium tetraiodide, preferably zirconium tetrachloride.

In the above step 4), the fourth solvent is one or more of alkane, aromatic hydrocarbon, ether and haloalkane, preferably one or more of n-hexane, diethyl ether, tetrahydrofuran, toluene, dichloromethane and 1,2-dichloroethane.

In the above step 4), the amount of the fourth solvent used may be selected depending on the intermediate product F, for example, the amount of the fourth solvent used may be 1 to 30 L, preferably 5 to 20 L, more preferably 12 to 18 L, relative to 1 mole of the intermediate product F.

In the above step 4), a mode of the fourth contact reaction is preferably as follows: the intermediate product F is dispersed in the fourth solvent under an inert atmosphere (e.g., under a nitrogen atmosphere or an argon atmosphere), and an n-butyl lithium solution (e.g., an n-butyl lithium hexane solution) is then added dropwise to a solution in which the intermediate product F is dispersed, and the fourth contact reaction is carried out.

Preferably, dispersing the intermediate product F in the fourth solvent is performed at a temperature of -30°C to 0°C, for example, stirring may be performed at -20°C for about 30 min.

The conditions of the fourth contact reaction may include a temperature of 10 to 40°C and a time of 8 to 40 h.

In the above step 4), preferably, a molar ratio of the intermediate product F to n-butyl lithium is 1: (2-2.4), preferably 1: (2.1-2.2).

In the above step 4), the fourth contact reaction product and MX₄ are subjected to the fifth contact reaction, and in the fifth contact reaction, MX₄ may be added directly to the fourth contact reaction product in the form of a solid or may be dispersed in a fifth solvent.

Examples of the fifth solvent may include the same solvent as the fourth solvent.

In the above step 4), the amount of MX₄ used can be selected depending on the intermediate product F, and preferably, a molar ratio of the intermediate product F to MX₄ is 1: (0.95-1).

In the above step 4), a mode of the fifth contact reaction is preferably as follows: a solution of MX₄ is added dropwise to the fourth contact reaction product at a temperature of -80°C to -60°C under an inert atmosphere (e.g., under a nitrogen atmosphere or an argon atmosphere), and the fifth contact reaction is carried out.

The conditions for the fifth contact reaction can include a temperature of 10 to 40°C and a time of 8 to 96 h.

After contacting by the fifth contact reaction, refining may be carried out by using conventional refining methods in the field, in a preferred embodiment of the present invention, after the fifth contact reaction is ended, a fifth contact reaction product is subjected to solid-liquid separation, a solid obtained after the solid-liquid separation is extracted with an organic solvent (preferably toluene) for 3 to 5 times, and a liquid phase obtained after the solid-liquid separation is then mixed with the extract, the solvent is removed under vacuum, washing is performed (for example, by using n-hexane), and the residual solvent is removed from the solid under vacuum to obtain the compound I.

In the present invention, a preparation method for the compound I can also include directly subjecting the second contact reaction product obtained in the above step 2) and MX₄ to the fifth contact reaction to obtain the compound I.

In the present invention, a preparation method for a metallocene compound in which X¹ and X² each are alkyl having 1 to 10 carbon atoms or aryl having 6 to 12 carbon atoms preferably includes the following steps:

### 5) subjecting the compound I and R⁰MgY to a sixth contact reaction in the presence of a sixth solvent to obtain a compound J,

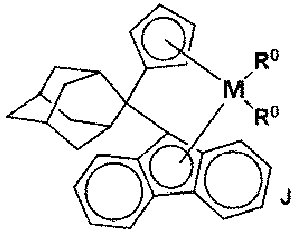

in R⁰MgY, R⁰ is an alkyl having 1 to 10 carbon atoms or an aryl having 6 to 12 carbon atoms; and Y is a chlorine atom or a bromine atom.

The alkyl having 1 to 10 carbon atoms or the aryl having 6 to 12 carbon atoms is as described above. In the above step 5), preferably, a molar ratio of the compound I to R⁰MgY is 1: (2-3), more preferably 1: (2.2-2.5).

In the above step 5), preferably, the sixth solvent is one or more of alkane, aromatic hydrocarbon, ether and haloalkane, more preferably one or more of n-hexane, diethyl ether, tetrahydrofuran, toluene, dichloromethane and 1,2-dichloroethane.

The amount of the sixth solvent used can be selected depending on the compound I, for example, the amount of the sixth solvent used can be 5 to 60 L, preferably 10 to 40 L, more preferably 25 to 32 L, relative to 1 mole of the compound I.

In the above step 5), a mode of the sixth contact reaction is preferably as follows: a R⁰MgY solution is added dropwise to a mixture of the compound I and the sixth solvent at -30°C to 0°C under an inert atmosphere (e.g., under a nitrogen atmosphere or an argon atmosphere), and the sixth contact reaction is carried out.

The conditions of the sixth contact reaction can include a temperature of 10 to 40°C and a time of 10-30 h.

After contacting by the sixth contact reaction, refining can be carried out by using conventional refining methods in the field, and in a preferred embodiment of the present invention, after completion of the sixth contact reaction, the sixth contact reaction product is subjected to solid-liquid separation, and a solvent is then removed from the obtained solid under vacuum to obtain the compound J.

The second aspect of the present invention provides a catalyst composition, wherein the catalyst composition includes:
a) the metallocene compound according to the first aspect of the present invention; and
b) a cocatalyst component.

According to the catalyst composition of the present invention, preferably, the cocatalyst component includes an alkyl aluminoxane or a combination of an organoboron compound and an organoaluminum compound; and more preferably, the cocatalyst component is an alkyl aluminoxane or a combination of an organoboron compound and an organoaluminum compound.

The alkyl aluminoxane is preferably a compound selected from structures shown in formula (2) and/or formula (3), 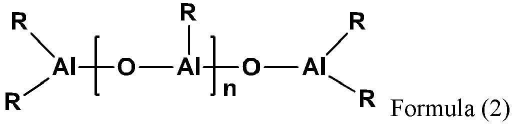 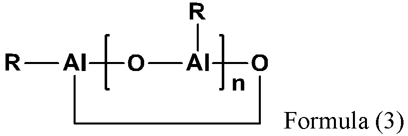 in formula (2) and formula (3), R is selected from an alkyl having 1 to 15 carbon atoms, and n represents an integer of 4 to 30; and more preferably, R is selected from an alkyl having 1 to 5 carbon atoms, and n represents an integer of 10 to 30.

Specific examples of the alkyl may include methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl, octyl, nonyl, decyl, undecyl, dodecyl, tridecyl, tetradecyl, pentadecyl, and the like.

Examples of n may include 4, 5, 6, 7, 8, 9, 10, 11, 12, 13, 14, 15, 16, 17, 18, 19, 20, 21, 22, 23, 24, 25, 26, 27, 28, 29, 30, and the like.

Specific examples of the alkyl aluminoxane may include methyl aluminoxane, ethyl aluminoxane, propyl aluminoxane and the like, preferably methyl aluminoxane.

According to the catalyst composition of the present invention, preferably, the organoboron compound is [B(C₆F₅)₄]⁻Z⁺, Z⁺ having a structure shown in formula (4) or formula (5),

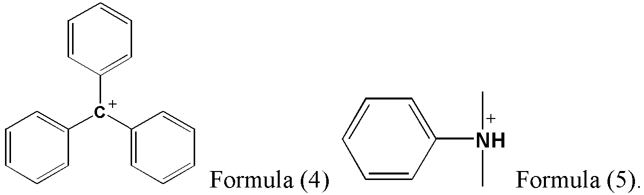

According to the catalyst composition of the present invention, preferably, the organoaluminum compound is a compound having a structure represented by a general formula AIX₁X₂X₃, X₁, X₂ and X₃ are each a halogen atom or an alkyl having 1 to 12 carbon atoms, X₁, X₂ and X₃ may be the same or different, and at least one of X₁, X₂ and X₃ is alkyl having 1 to 12 carbon atoms.

Examples of the alkyl having 1 to 12 carbon atoms may include methyl, ethyl, propyl, isopropyl, butyl, tert-butyl, sec-butyl, isobutyl, pentyl, 1,1-dimethylpropyl, 1,2-dimethylpropyl, neopentyl, 1-methylbutyl, 2-methylbutyl, isopentyl, hexyl, heptyl, octyl, nonyl, decyl, undecyl, dodecyl, and the like.

Examples of the halogen atom may include fluorine, chlorine, bromine or iodine, preferably fluorine, chlorine or bromine, more preferably chlorine or bromine, and particularly preferably chlorine.

In the present invention, specific examples of the organoaluminum compound may include one or a mixture of two or more of diethyl aluminum chloride, triethyl aluminum, tri-isobutyl aluminum, tri-n-hexyl aluminum and tri-n-octyl aluminum, preferably tri-isobutyl aluminum.

According to the catalyst composition of the present invention, the cocatalyst component is an alkyl alumoxane, and a molar ratio of the metallocene compound to the alkyl alumoxane in terms of aluminum is 1: (100-50,000), preferably 1: (500-10,000), more preferably 1: (500-2,000).

According to the catalyst composition of the present invention, when the cocatalyst component is a combination of an organoboron compound and an organoaluminum compound, a molar ratio of the metallocene compound to the organoboron compound is 1: (1-20), preferably 1: (1-5), more preferably 1: (1-2), and a molar ratio of the metallocene compound to the organoaluminum compound is 1: (10-5,000), preferably 1: (50-1,000), more preferably 1: (50-500).

The third aspect of the present invention provides a method for preparing an ethylene-cyclic olefin copolymer, including subjecting ethylene and cyclic olefin to a copolymerization reaction by using a catalyst composition, wherein the catalyst composition is the catalyst composition according to the second aspect of the present invention.

According to the method of the present invention, preferably, the metallocene compound in a copolymerization reaction system has a concentration of 1×10⁻⁸ mol/L to 1×10⁻² mol/L, preferably 1×10⁻⁶ mol/L to 1×10⁻³ mol/L.

According to the method of the present invention, preferably, the copolymerization reaction is carried out in an inert organic solvent. The inert organic solvent may be one or a mixture of more of a linear aliphatic hydrocarbon, a branched aliphatic hydrocarbon, a substituted or unsubstituted cyclic aliphatic hydrocarbon, and a substituted or unsubstituted aromatic hydrocarbon. Specific examples of the inert organic solvent may include one or more of hexane, heptane, cyclohexane, cyclooctane, toluene, xylene, and among them, one or more of toluene, cyclohexane and hexane are preferred. In addition, the amount of the organic solvent may be determined depending on the reactivity to ensure that the resulting polymer is well dissolved in the system, at least without affecting the dispersion. According to the method of the present invention, preferably, the olefin is ethylene or a combination of ethylene and alpha-olefin.

According to the method of the present invention, preferably, the alpha-olefin is selected from one or more of propylene, 1-butene, 1-hexene, 1-octene and 4-methyl-1-pentene.

According to the method of the present invention, when the olefin is ethylene, the ethylene has a partial pressure of 0.1 to 6 MPa, preferably 0.1 to 3 MPa.

According to the method of the present invention, when the olefin is the combination of ethylene and alpha-olefin, the amount of ethylene and the alpha-olefin used may be the typical amount used in the synthesis of ethylene-alpha-olefin copolymers in the field, for example, the alpha-olefin in the copolymerization reaction system has a concentration of 0.001 to 8 mol/L, preferably 0.005 to 4 mol/L. Furthermore, the ethylene has a partial pressure of 0.1 to 6 MPa, preferably 0.1 to 3 MPa. According to the method of the present invention, the copolymerization reaction conditions may be the conventional conditions used in the synthesis of polyolefins in the field. Preferably, the copolymerization reaction is carried out at a temperature of -50°C to 200°C for 1 to 300 min; and more preferably, the copolymerization reaction is carried out at a temperature of -20°C to 150°C for 5 to 60 min.

Hereinafter, the present invention will be described in detail by way of examples, but the present invention is not limited to the following examples.

The raw materials used in the following examples and comparative examples, if not particularly limited, are disclosed in the prior art, and are, for example, commercially available directly or are prepared according to preparation methods disclosed in the prior art.

In the following examples and comparative examples, ¹H nuclear magnetic resonance (¹H-NMR) of the synthesized compounds was carried out on a Bruker AVANCEIII-400MHz spectrometer with CDCl₃ as a solvent at 25°C.

The polymer molecular weight was determined by gel permeation chromatography (GPC) at 150°C on a Waters Alliance GPCV2000 with 1,2,4-trichlorobenzene as a solvent.

The comonomer content of a polymer was determined by a ¹³C nuclear magnetic resonance (13C-NMR) experiment of a solution which was performed on a Bruker AVANCEIII-400MHz spectrometer with a 10mm PASEX 13C-1H/D Z-GRD probe. A ¹³C resolution of the spectrometer is 0.09 Hz. A sample solution was prepared by dissolving 200 mg of a polymer material in 2.5 ml of D₄-o-dichlorobenzene (ODCB-d₄) in a 10 mm test tube at 130°C. ¹³C-NMR measurement experiment was performed at 125°C, a spin rate of 20 Hz, a pulse angle of 90°, continuous Waltz-16 decoupling, a spectral width of 120 ppm, the acquisition time of 5 s, and a relaxation delay of 10 s. A repeat backbone methylene peak was set at 30.0000 ppm as a chemical shift reference.

### Example 1

### This example serves to illustrate synthesis of a metallocene compound H-1

### Metallocene compound H-1: in the above compound H, M is zirconium and NA₂ is dimethyl amino. 1) Synthesis of an intermediate product D

In a 250 mL three-necked flask with magnetic stirring, a catalyst C (pyrrolidine, 12 mmol) was added and 30 mL of anhydrous methanol was added at 15°C, stirring was performed for 5 min, a compound A (1.8 g, 11.98 mmol) was added, stirring was performed for 5 min, a compound B (2.0 g, 30.26 mmol) was added, and a reaction was carried out under stirring for 24 h, wherein the reaction temperature was kept to be not higher than 25°C. The solvent and the catalyst were removed by filtration, and the resulting product was washed with anhydrous methanol. The residual solvent was removed under vacuum at room temperature to obtain 2.26 g of a yellow solid, with a yield of 94%.

¹H-NMR (CDCl₃): 6.62-6.55 ppm (2H), 6.55-6.48 ppm (2H), 3.33-3.24 ppm (2H), 2.14-1.85 ppm (12H).

### 2) Synthesis of an intermediate product F

344 mg (2.0 mmol) of a reactant E (fluorenyl lithium) was dispersed in 30 ml of tetrahydrofuran under a nitrogen atmosphere, and the obtained solution was stirred at -20°C for 30 min; 400 mg of the intermediate product D (2.0 mmol) was dissolved in 10 ml of tetrahydrofuran, and this solution was slowly added dropwise to the fluorenyl lithium tetrahydrofuran solution; after the addition is completed, the temperature was slowly raised to room temperature, and a reaction was carried out under stirring for 24 h; the reaction mixture was poured into a saturated ammonium chloride aqueous solution, an organic phase was separated, an aqueous phase was extracted with diethyl ether, organic phases were mixed, and dried over anhydrous sodium sulfate, and an organic solvent was removed under vacuum to obtain 622 mg of a yellow solid, with a yield of 81%.

### 3) Synthesis of the metallocene compound H-1

Under a nitrogen atmosphere, 383 mg of the intermediate product F (1 mmol) was dissolved in 15 mL of toluene, 267 mg of Zr(NMe₂)₄ (1 mmol) was added, and a reaction was carried out under reflux at 110°C for 24 h, the resulting reaction solution was cooled, and filtered, and a solvent was removed under vacuum to obtain 461 mg of an orange solid, with a yield of 85%.

¹H-NMR (CDCl₃): 8.25-8.15 ppm (2H), 7.83-7.75 ppm (2H), 7.65-7.55 ppm (2H), 7.23-7.14 ppm (2H), 6.43-6.35 ppm (2H), 5.78-5.70 ppm (2H), 2.55-2.51 ppm (12H), 2.40-2.25 ppm (6H), 2.06-1.88 ppm (8H).

### Example 2

### Synthesis of a metallocene compound I-1

Metallocene compound I-1: in a compound I, M is zirconium and X is a chlorine atom.

Fluorene (499 mg, 3 mmol) was weighed into a 250 mL three-necked flask A, and after vacuum-nitrogen replacement for three times, 10 mL of anhydrous diethyl ether previously dehydrated and deoxygenated was added to dissolve fluorene. The three-necked flask A was placed in an oil bath of -20°C, and stirring was performed for 15 min. n-butyl lithium (1.05 eq., 2.5 mol/L in hexane) was added dropwise to the three-necked flask A at -20°C, and after completion of the addition, the three-necked flask A was transferred to room temperature, and stirring was performed for 8 h. An intermediate product D (631 mg, 1.05 eq.) was weighed into another 100 mL three-necked flask B, and after nitrogen replacement for three times, 10 mL of anhydrous diethyl ether previously treated with an oven-dried molecular sieve was added to dissolve the intermediate product D. The three-necked flask A was placed in an oil bath of -20°C, and stirring was performed for 15 min. A solution in the three-necked flask B was added dropwise to the three-necked flask A. After completion of the addition, the three-necked flask A was transferred to room temperature, and stirring was performed for 24 h. The three-necked flask A was placed in an oil bath of -20°C, and stirring was performed for 15 min, n-butyl lithium (1.05 eq., 2.5 mol/L in hexane) was added dropwise to the three-necked flask A, and after completion of the addition, the three-necked flask A was transferred to room temperature, and stirring was performed for 8 h. The three-necked flask A was placed in an oil bath of -70°C. and stirring was performed for 30 min. Under nitrogen protection, a zirconium tetrachloride solid (700 mg, 3 mmol) was added to the three-necked flask A in three portions, and stirring was performed at room temperature for 72 h. The reaction mixture was transferred to a centrifuge tube, and centrifuged (3,500 rpm), a supernatant was taken, and the residual solid was extracted with 5 ml of anhydrous diethyl ether, centrifugation was performed (3,500 rpm), and a supernatant was taken, wherein extraction was performed for a total of three times, and the residual solid was discarded. The supernatants and the extracts were mixed, and diethyl ether was removed under vacuum. The resulting solid was dissolved with a small amount of toluene, the obtained solution was filtered into a sample vial, an equal volume of ultra-dry n-hexane was added, the sample vial was allowed to stand at room temperature for 24 h in a nitrogen box, and a sample was centrifuged to obtain 471 mg of a solid compound, with a yield of 30%.

¹H-NMR (CDCl₃): 8.23-8.14ppm (2H), 7.79-7.70 ppm (2H), 7.63-7.54 ppm (2H), 7.24-7.15 ppm (2H), 6.43-6.35 ppm (2H), 5.77-5.68 ppm (2H), 2.48-2.33 ppm (6H), 2.15-1.97 ppm (8H).

### Example 3

### Synthesis of a metallocene compound I-1

Metallocene compound I-1: in a compound I, M is zirconium and X is a chlorine atom. 383 mg of the intermediate product F (1 mmol) was dissolved in 15 mL of toluene under a nitrogen atmosphere, 0.84 mL of n-butyl lithium (2.5 mol/L in hexane) was added dropwise at -20°C, after completion of the addition, a three-necked flask A was transferred to room temperature, and stirring was performed for 8 h. The three-necked flask A was placed in an oil bath of -70°C, and stirring was performed for 30 min. Under nitrogen protection, a zirconium tetrachloride solid (233 mg, 1 mmol) was added to the three-necked flask A in three portions, and stirring was performed at room temperature for 72 h. The reaction mixture was transferred to a centrifuge tube, and centrifuged (3,500 rpm), a supernatant was taken, and the residual solid was extracted with 5 ml of anhydrous diethyl ether, centrifugation was performed (3,500 rpm), and a supernatant was taken, wherein extraction was performed for a total of three times, and the residual solid was discarded. The supernatants and the extracts were mixed, and diethyl ether was removed under vacuum. The resulting solid was dissolved with a small amount of toluene, the obtained solution was filtered into a sample vial, an equal volume of ultra-dry n-hexane was added, the sample vial was allowed to stand at room temperature for 24 h in a nitrogen box, and a sample was centrifuged to obtain 276 mg of a solid compound, with a yield of 53%.

The obtained solid compound was confirmed to be the metallocene compound I-1 by nuclear magnetic resonance determination.

### Example 4

### Synthesis of a metallocene compound J-1

Metallocene compound J-1: in a compound J, M is zirconium and R⁰ is benzyl.

525 mg of a metallocene compound I (1 mmol) was dissolved in 30 mL of toluene under a nitrogen atmosphere, stirring was performed in an oil bath of -70°C for 30 min, 2 mL of a benzyl magnesium chloride solution (1 mol/L in tetrahydrofuran) was added dropwise, the temperature was slowly raised to room temperature, a reaction was carried out for 24 h, the resulting reaction solution was filtered, and a solvent was removed under vacuum to obtain 523 mg of an orange solid, with a yield of 82%. ¹H-NMR (CDCl₃): 8.28-8.20 ppm (2H), 7.82-7.74 ppm (2H), 7.64-7.53 ppm (2H), 7.32-7.08 ppm (12H), 6.45-6.38 ppm (2H), 5.77-5.67 ppm (2H), 2.62-2.58 ppm (4H), 2.55-2.51 ppm (12H), 2.41-2.25 ppm (6H), 2.09-1.90 ppm (8H).

### Example 5

### Synthesis of a metallocene compound J-2

Metallocene compound J-2: in the compound J, M is zirconium and R⁰ is methyl.

Under a nitrogen atmosphere, 472 mg of the metallocene compound I (1 mmol) was dissolved in 30 mL of toluene, stirring was performed in an oil bath of -70°C for 30 min, 2 mL of a methyl magnesium bromide solution (1 mol/L in tetrahydrofuran) was added dropwise, the temperature was slowly raised to room temperature, a reaction was carried out for 24 h, the resulting reaction solution was filtered, and a solvent was removed under vacuum to obtain 357 mg of an orange solid, with a yield of 74%. ¹H-NMR (CDCl₃): 8.24-8.15 ppm (2H), 7.79-7.71 ppm (2H), 7.62-7.54 ppm (2H), 7.24-7.16 ppm (2H), 6.43-6.35 ppm (2H), 5.77-5.67 ppm (2H), 2.55-2.51 ppm (12H), 2.40-2.25 ppm (6H), 2.06-1.88 ppm (8H), -0.97 ppm (6H).

### Example 6

This example serves to illustrate the copolymerization of ethylene-norbornene.

4.71 g of norbornene was added to a well-dried 250 mL glass polymerization bottle, vacuuming was performed, and nitrogen purging was repeatedly performed for three times. Vacuuming was performed, the polymerization bottle was filled with ethylene, and heating was performed in an oil bath to 70°C to maintain 1 atm of ethylene in the polymerization bottle. 25 ml of toluene and 3 ml of a methyl aluminoxane toluene solution (containing 5.0 mmol of methyl aluminoxane) were added in sequence, and after the temperature was stabilized at 70°C, 2 ml of a catalyst toluene solution (containing 2 µmol of the compound I-1) was added, and timing was started. During the reaction, as ethylene was consumed, the ethylene was replenished to maintain 1 atm of ethylene in the polymerization bottle at all times. After 20 minutes, the ethylene was turned off, the reaction solution was poured into a beaker, 300 mL of ethanol and 5 mL of concentrated hydrochloric acid were added, stirring was performed for 6 h or more, filtration was performed to obtain a polymer, and the obtained polymer was dried under vacuum at 60°C for 24 h to obtain 2.76 g of the polymer, with an activity of 4,140 kg polymer/mol catalyst/h. The weight average molecular weight Mw of the polymer was equal to 17.9×10⁴, and the molecular weight distribution MWD was equal to 1.92 as determined by gel permeation chromatography. The content of norbornene units in the polymer was determined by carbon-13 nuclear magnetic resonance spectroscopy to be 55.7 mol%. The polymer had a glass transition temperature of 167°C as determined by differential scanning calorimetry (DSC).

### Comparative example 1

The method in Example 6 was followed, except that the metallocene compound I-1 was replaced by the same molar amount of diphenylmethylidene(cyclopentadienyl)(9-fluorenyl)zirconium dichloride, identically obtaining 2.01 g of a polymer, with a polymerization activity of 3,015 kg polymer/mol catalyst/h. The weight average molecular weight Mw of the polymer was equal to 12.6×10⁴, and the molecular weight distribution MWD was equal to 2.27 as determined by gel permeation chromatography. The content of norbornene units in the polymer was determined by carbon-13 nuclear magnetic resonance spectroscopy to be 51.0 mol%. The polymer had a glass transition temperature of 163°C as determined by DSC.

### Comparative example 2

The method in Example 6 was followed, except that the metallocene compound I-1 was replaced by the same molar amount of ref-1, identically obtaining 2.01 g of a polymer, with an activity of 3,015 kg polymer/mol catalyst/h. The weight average molecular weight Mw of the polymer was equal to 15.6×10⁴, and the molecular weight distribution MWD was equal to 2.11 as determined by gel permeation chromatography. The content of norbornene units in the polymer was determined by carbon-13 nuclear magnetic resonance spectroscopy to be 47.1 mol%. The polymer had a glass transition temperature of 153°C as determined by DSC.

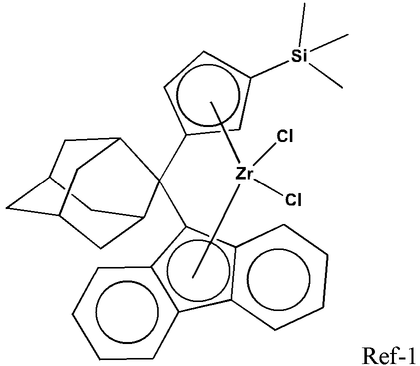

### Comparative example 3

The method in Example 6 was followed, except that the metallocene compound I-1 was replaced by the same molar amount of ref-2, identically obtaining 1.92 g of a polymer, with an activity of 2,880 kg polymer/mol catalyst/h. The weight average molecular weight Mw of the polymer was equal to 14.7×10⁴, and the molecular weight distribution MWD was equal to 2.06 as determined by gel permeation chromatography. The content of norbornene units in the polymer was determined by carbon-13 nuclear magnetic resonance spectroscopy to be 49.2 mol%. The polymer had a glass transition temperature of 157°C as determined by DSC.

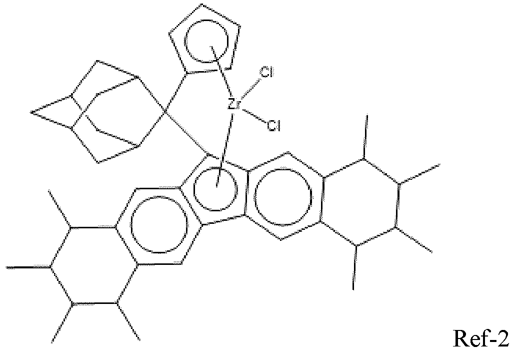

### Example 7

This example serves to illustrate the copolymerization of ethylene-norbornene.

4.71 g of norbornene was added to a well-dried 250 mL glass polymerization bottle, vacuuming was performed, and nitrogen purging was repeatedly performed for three times. Vacuuming was performed, the polymerization bottle was filled with ethylene, and heating was performed in an oil bath to 70°C to maintain 1 atm of ethylene in the polymerization bottle. 25 mL of Toluene, 1 mL of a tri-isobutyl aluminum toluene solution (containing 1.0 mmol of tri-isobutyl aluminum), and 2 mL of a catalyst toluene solution (containing 2 µmol of the compound I-1) were added in sequence, and after the temperature was stabilized at 70°C, 2 mL of a triphenylcarbenium tetrakis(pentafluoro phenyl)borate toluene solution (containing 2.4 µmol of triphenylcarbenium tetrakis(pentafluorophenyl)borate) was added, and timing was started. During the reaction, as ethylene was consumed, the ethylene was replenished to maintain 1 atm of ethylene in the polymerization bottle at all times. After 20 minutes, the ethylene was turned off, the reaction solution was poured into a beaker, 300 mL of ethanol and 5 mL of concentrated hydrochloric acid were added, stirring was performed for 6 h or more, filtration was performed to obtain a polymer, and the obtained polymer was dried under vacuum at 60°C for 24 h to obtain 3.15 g of the polymer, with an activity of 4,725 kg polymer/mol catalyst/h. The weight average molecular weight Mw of the polymer was equal to 19.8×10⁴, and the molecular weight distribution MWD was equal to 1.99 as determined by gel permeation chromatography. The content of norbornene units in the polymer was determined by carbon-13 nuclear magnetic resonance spectroscopy to be 56.8 mol%. The polymer had a glass transition temperature of 167°C as determined by differential scanning calorimetry (DSC).

### Comparative example 4

The method in Example 7 was followed, except that the metallocene compound I-1 was replaced by the same molar amount of diphenyl methylidene(cyclopentadiene)(9-fluorenyl)zirconium dichloride, identically obtaining 2.51 g of a polymer, with a polymerization activity of 3,765 kg polymer/mol catalyst/h. The weight average molecular weight Mw of the polymer was equal to 18.5×10⁴, and the molecular weight distribution MWD was equal to 2.07 as determined by gel permeation chromatography. The content of norbornene units in the polymer was determined by carbon-13 nuclear magnetic resonance spectroscopy to be 54.1 mol%. The polymer had a glass transition temperature of 165°C as determined by DSC.

### Example 8

This example serves to illustrate the copolymerization of ethylene-norbornene.

4.71 g of norbornene was added to a well-dried 250 mL glass polymerization bottle, vacuuming was performed, and nitrogen purging was repeatedly performed for three times. Vacuuming was performed, the polymerization bottle was filled with ethylene, and heating was performed in an oil bath to 70°C to maintain 1 atm of ethylene in the polymerization bottle. 25 mL of toluene, 1 mL of a tri-isobutyl aluminum toluene solution (containing 1.0 mmol of tri-isobutyl aluminum), and 2 mL of a catalyst toluene solution (containing 2 µmol of the compound I-1) were added in sequence, and after the temperature was stabilized at 70°C, 2 mL of a N,N-dimethylanilinium tetrakis(pentafluorophenyl)borate toluene solution (containing 2.4 µmol of N,N-dimethyl anilinium tetrakis(pentafluorophenyl)borate) was added, and timing was started. During the reaction, as ethylene was consumed, the ethylene was replenished to maintain 1 atm of ethylene in the polymerization bottle at all times. After 20 minutes, the ethylene was turned off, the reaction solution was poured into a beaker, 300 mL of ethanol and 5 mL of concentrated hydrochloric acid were added, stirring was performed for 6 h or more, filtration was performed to obtain a polymer, and the obtained polymer was dried under vacuum at 60°C for 24 h to obtain 3.28 g of the polymer, with an activity of 4,920 kg polymer/mol catalyst/h. The weight average molecular weight Mw of the polymer was equal to 8.5×10⁴, and the molecular weight distribution MWD was equal to 1.90 as determined by gel permeation chromatography. The content of norbornene units in the polymer was determined by carbon-13 nuclear magnetic resonance spectroscopy to be 55.7 mol%. The polymer had a glass transition temperature of 167°C as determined by differential scanning calorimetry (DSC).

### Example 9

This example serves to illustrate the copolymerization of ethylene-norbornene.

20 g of norbornene was added to a well-dried 100 mL stainless steel polymerization kettle, vacuuming was performed, nitrogen purging was repeatedly performed for three times, and finally, the polymerization kettle was filled with ethylene. Heating was set to be 75°C, during heating, 30 ml of toluene and 1 ml of a tri-isobutyl aluminum toluene solution (containing 1.0 mmol of tri-isobutyl aluminum) were added sequentially, after the temperature was stabilized at 75°C, 2 ml of a catalyst toluene solution (containing 2 µmol of the compound I-1) was added, and after 5 minutes, 2 ml of a triphenylcarbenium tetrakis(pentafluorophenyl)borate toluene solution (containing 2.4 µmol of triphenylcarbenium tetrakis(pentafluorophenyl)borate) was added, the pressure of the ethylene was rapidly increased to 2 atm, the heating was set to be 80°C, and timing was started. During the reaction, the ethylene was continuously replenished as the ethylene was consumed to maintain a total pressure of 2 atm in the polymerization bottle at all times. After 30 minutes, the ethylene was turned off, the reaction solution was poured into a beaker, 300 ml of ethanol and 5 ml of concentrated hydrochloric acid were added, stirring was performed for 6 h or more, filtration was performed to obtain a polymer, and the obtained polymer was dried under vacuum at 60°C for 24 h to obtain 13.95 g of the polymer, with an activity of 13,950 kg polymer/mol catalyst/h. The weight average molecular weight Mw of the polymer was equal to 14.7×10⁴, and the molecular weight distribution MWD was equal to 2.09 as determined by gel permeation chromatography. The content of norbornene units in the polymer was determined by carbon-13 nuclear magnetic resonance spectroscopy to be 51.9 mol%. The polymer had a glass transition temperature of 162°C as determined by DSC.

### Example 10

This example serves to illustrate the copolymerization of ethylene-norbornene.

20 g of norbornene was added to a well-dried 100 mL stainless steel polymerization kettle, vacuuming was performed, nitrogen purging was repeatedly performed for three times, and finally, the polymerization kettle was filled with ethylene. Heating was set to be 75°C, during heating, 30 ml of toluene and 1 ml of a tri-isobutyl aluminum toluene solution (containing 1.0 mmol of tri-isobutyl aluminum) were added sequentially, after the temperature was stabilized at 75°C, 2 ml of a catalyst toluene solution (containing 2 µmol of the compound I-1) was added, and after 5 minutes, 2 ml of a triphenylcarbenium tetrakis(pentafluorophenyl)borate toluene solution (containing 2.4 µmol of triphenylcarbenium tetrakis(pentafluorophenyl)borate) was added, the pressure of the ethylene was rapidly increased to 4 atm, the heating was set to be 80°C, and timing was started. During the reaction, the ethylene was continuously replenished as the ethylene was consumed to maintain a total pressure of 4 atm in the polymerization bottle at all times. After 30 minutes, the ethylene was turned off, the reaction solution was poured into a beaker, 300 ml of ethanol and 5 ml of concentrated hydrochloric acid were added, stirring was performed for 6 h or more, filtration was performed to obtain a polymer, and the obtained polymer was dried under vacuum at 60°C for 24 h to obtain 17.26 g of the polymer, with an activity of 17,260 kg polymer/mol catalyst/h. The weight average molecular weight Mw of the polymer was equal to 17.6× 10⁴, and the molecular weight distribution MWD was equal to 1.99 as determined by gel permeation chromatography. The content of norbornene units in the polymer was determined by carbon-13 nuclear magnetic resonance spectroscopy to be 48.6 mol%. The polymer had a glass transition temperature of 159°C as determined by DSC.

### Example 11

This example serves to illustrate the copolymerization of ethylene-norbornene.

The method in Example 6 was followed, except that the metallocene compound I-1 was replaced by the same molar amount of the metallocene compound H-1, identically obtaining 3.01 g of a polymer, with an activity of 4515 kg polymer/mol catalyst/h. The weight average molecular weight Mw of the polymer was equal to 16.2× 10⁴, and the molecular weight distribution MWD was equal to 1.96 as determined by gel permeation chromatography. The content of norbornene units in the polymer was determined by carbon-13 nuclear magnetic resonance spectroscopy to be 55.6 mol%. The polymer had a glass transition temperature of 167°C as determined by differential scanning calorimetry (DSC).

### Example 12

This example serves to illustrate the copolymerization of ethylene-norbornene.

The method in Example 7 is followed, except that the metallocene compound I-1 is replaced by the same molar amount of the metallocene compound H-1, identically obtaining a polymer.

### Example 13

This example serves to illustrate the copolymerization of ethylene-norbornene.

The method in Example 6 was followed, except that the metallocene compound I-1 was replaced by the same molar amount of the metallocene compound J-1, identically obtaining 2.99 g of a polymer, with an activity of 4,485 kg polymer/mol catalyst/h. The weight average molecular weight Mw of the polymer was equal to 18.6×10⁴, and the molecular weight distribution MWD was equal to 1.93 as determined by gel permeation chromatography. The content of norbornene units in the polymer was determined by carbon-13 nuclear magnetic resonance spectroscopy to be 55.6 mol%. The polymer had a glass transition temperature of 167°C as determined by differential scanning calorimetry (DSC).

### Example 14

This example serves to illustrate the copolymerization of ethylene-norbornene.

The method in Example 7 was followed, except that the metallocene compound I-1 was replaced by the same molar amount of the metallocene compound J-1, identically obtaining 3.01 g of a polymer, with an activity of 4,515 kg polymer/mol catalyst/h. The weight average molecular weight Mw of the polymer was equal to 21.1×10⁴, and the molecular weight distribution MWD was equal to 2.01 as determined by gel permeation chromatography. The content of norbornene units in the polymer was determined by carbon-13 nuclear magnetic resonance spectroscopy to be 55.6 mol%. The polymer had a glass transition temperature of 168°C as determined by DSC.

### Example 15

This example serves to illustrate the copolymerization of ethylene-norbornene.

The method in Example 6 was followed, except that the metallocene compound I-1 was replaced by the same molar amount of the metallocene compound J-2, identically obtaining 3.41 g of a polymer, with an activity of 5,115 kg polymer/mol catalyst/h. The weight average molecular weight Mw of the polymer was equal to 17.8×10⁴, and the molecular weight distribution MWD was equal to 1.90 as determined by gel permeation chromatography. The content of norbornene units in the polymer was determined by carbon-13 nuclear magnetic resonance spectroscopy to be 56.1 mol%. The polymer had a glass transition temperature of 169°C as determined by DSC.

### Example 16

This example serves to illustrate the copolymerization of ethylene-norbornene.

The method in Example 7 was followed, except that the metallocene compound I-1 was replaced by the same molar amount of the metallocene compound J-2, identically obtaining 3.27 g of a polymer, with an activity of 4,905 kg polymer/mol catalyst/h. The weight average molecular weight Mw of the polymer was equal to 19.2×10⁴, and the molecular weight distribution MWD was equal to 1.96 as determined by gel permeation chromatography. The content of norbornene units in the polymer was determined by carbon-13 nuclear magnetic resonance spectroscopy to be 56.3 mol%. The polymer had a glass transition temperature of 169°C as determined by DSC.

Preferred embodiments of the present invention are described in detail above, however, the present invention is not limited thereto. Within the scope of the technical idea of the present invention, many simple variations can be made to the technical solutions of the present invention, including the combinations of various technical features in any other suitable manner, and these simple variations and combinations should likewise be regarded as the contents disclosed in the present invention, and all fall within the protection scope of the present invention.

## Claims

1. A metallocene compound, **characterized by** having a structure represented by formula (1), 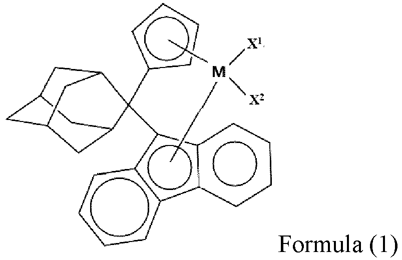 wherein in formula (1), M is a tetravalent transition metal atom; and X¹ and X² are each independently a halogen atom, an alkyl having 1 to 10 carbon atoms, an aryl having6 to 12 carbon atoms, or an N,N-dialkyl amino having 2 to 8 carbon atoms.

2. The metallocene compound according to claim 1, wherein M is a titanium atom, a zirconium atom or a hafnium atom; and X¹ and X² are each independently a halogen atom, an alkyl having 1 to 3 carbon atoms, an aryl having 6 to 8 carbon atoms or an N,N-dialkyl amino having 2 to 6 carbon atoms; or
M is a titanium atom or a zirconium atom, more preferably the zirconium atom; and X¹ and X² are each independently F, Cl, Br, I, methyl, ethyl, propyl, phenyl, benzyl, N,N-dimethyl amino, N,N-diethyl amino or N,N-dipropyl amino; or
M is a zirconium atom; and X¹ and X² are each independently Cl, methyl, benzyl or N,N-dimethyl amino.

3. A catalyst composition, **characterized by** comprising the following components:
a) the metallocene compound according to claim 1 or 2; and
b) a cocatalyst component.

4. The catalyst composition according to claim 3, wherein the cocatalyst component comprises an alkyl aluminoxane or a combination of an organoboron compound and an organoaluminum compound; or
the cocatalyst component is an alkyl aluminoxane or a combination of an organoboron compound and an organoaluminum compound.

5. The catalyst composition according to claim 4, wherein the alkyl aluminoxane is a compound selected from structures shown in formula (2) and/or formula (3), 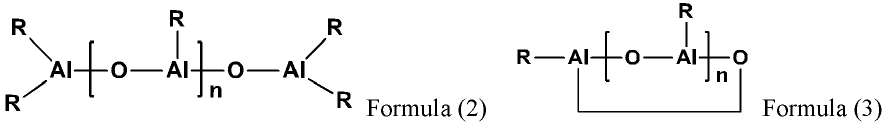
in formula (2) and formula (3), R is selected from an alkyl having 1 to 15 carbon atoms, and n represents an integer of 4 to 30; or
the alkyl aluminoxane is methyl aluminoxane.

6. The catalyst composition according to claim 4, wherein the organoboron compound is [B(C₆F₅)₄]⁻Z⁺, Z⁺ having a structure shown in formula (4) or formula (5),

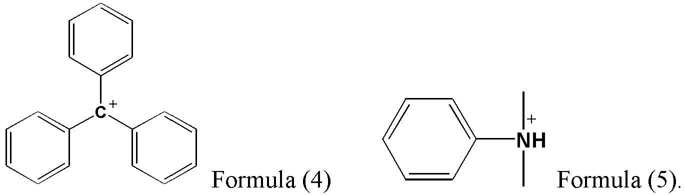

7. The catalyst composition according to claim 4, wherein the organoaluminum compound is a compound having a structure represented by a general formula AlX₁X₂X₃, X₁, X₂ and X₃ are each a halogen atom or an alkyl having 1 to 12 carbon atoms, X₁, X₂ and X₃ can be the same or different, and at least one of X₁, X₂ and X₃ is an alkyl having 1 to 12 carbon atoms; or
the organoaluminum compound is one or a mixture of two or more of diethyl aluminum chloride, triethyl aluminum, tri-isobutyl aluminum, tri-n-hexyl aluminum and tri-n-octyl aluminum, preferably tri-isobutyl aluminum.

8. The catalyst composition according to claim 4, wherein the cocatalyst component is an alkyl alumoxane, and a molar ratio of the metallocene compound to the alkyl alumoxane in terms of aluminum is 1: (100-50,000); or
the cocatalyst component is an alkyl alumoxane, and a molar ratio of the metallocene compound to the alkyl alumoxane in terms of aluminum is 1: (500-2,000).

9. The catalyst composition according to claim 4, wherein the cocatalyst component is a combination of an organoboron compound and an organoaluminum compound, a molar ratio of the metallocene compound to the organoboron compound is 1: (1-20), and a molar ratio of the metallocene compound to the organoaluminum compound is 1: (10-5,000); or
a molar ratio of the metallocene compound to the organoboron compound is 1: (1-2), and a molar ratio of the metallocene compound to the organoaluminum compound is 1: (50-500).

10. A method for preparing an ethylene-cyclic olefin copolymer, comprising subjecting ethylene and cyclic olefin to a copolymerization reaction by using a catalyst composition, **characterized by** that the catalyst composition is the catalyst composition according to any one of claims 2 to 9.

11. The method according to claim 10, wherein the metallocene compound in a copolymerization reaction system has a concentration of 1×10⁻⁸ mol/L to 1×10⁻² mol/L, preferably 1×10⁻⁶ mol/L to 1×10⁻³ mol/L.

12. The method according to claim 10, wherein the cyclic olefin is one or more of cyclopentene, cyclohexene, cycloheptene, cyclooctene, norbornene and tetracyclo[6.2.1.13,6.2,7]dodeca-4-ene.

13. The method according to claim 12, wherein the ethylene has a partial pressure of 0.1 to 6 MPa, preferably 0.1 to 3 MPa.

14. The method according to claim 10, wherein the copolymerization reaction is carried out in the presence of an organic solvent, the organic solvent being one or more of toluene, cyclohexane and hexane.

15. The method according to any one of claims 10 to 14, wherein the copolymerization reaction is carried out at a temperature of -50°C to 200°C for 1 to 300 min.
